# EUROPEAN PATENT APPLICATION

(11) **EP 2 811 475 A1**
(43) Date of publication of application: **10.12.2014**
(21) Application number: 13382211.4
(22) Date of filing: 03.06.2013
(51) Int. Cl.: G08C 25/00, H02J 3/00, H04Q 9/00, H04L 29/06

(54) **A computer implemented method for tracking and checking measures and computer programs thereof**

(71) Applicant: Telefonica Digital España, S.L.U., 28013 Madrid (ES)
(72) Inventor: Romero Bueno, Francisco, 28013 Madrid (ES)
(74) Representative: Gonzalez-Alberto Rodriguez, Natalia

(57) **Abstract**

A master node comprises receiving from a plurality of slaves nodes messages related with measures generated by the slaves nodes, the method: capturing, a traffic driver unit, said messages sent by the slaves nodes and further sending them to a monitor unit; analyzing, said monitor unit, the received messages so as to detect, by means of a behavioral learning technique, anomalies in said messages; when an anomaly is detected, sending, said monitor unit, the detected anomaly to a regenerator unit for regenerating at least the detected anomaly by means of a prediction technique; and injecting, said traffic drive unit, measures regenerated by said regenerator unit to the transport network.

## Description

### Field of the art

The present invention generally relates to a computer implemented method for tracking and checking measures, and more particularly to a computer implemented method for monitoring or tracking the messages exchanged between a slave node and a master node in order to look for anomalies in the measures within those messages and to inject appropriate measures instead of the anomalous ones.

The invention also relates to computer programs adapted to perform some of the steps of the proposed computer implemented method.

### Prior State of the Art

Because of electricity cannot be stored, the electricity demand is something that cannot be satisfied using accumulated resources, but in real time, producing it just an instant before it is consumed.

Nevertheless, since the current power plants cannot be switched on instantly, but they need a starting time in terms of hours, they must be programmed before they are required to produce electricity. Which power plants will be running and the power they will generate is something decided in the "auction demand", usually managed by the National Electricity Operator.

The auction demand occurs once a day, agreeing prices and generation quotas among producers and the Operator. Which is important from this process is that producers must generate the negotiated quota at risk to be severely fined by the Electricity Operator if not generated.

The way the Operator knows if a producer is accomplishing the agreement is not by measuring the generated power, since the electricity is not sent to the Operator, but pushed into the transport network. Actually, it is done by receiving from the producers periodic and very frequent reports (usually, every 4 seconds) about the production measures.

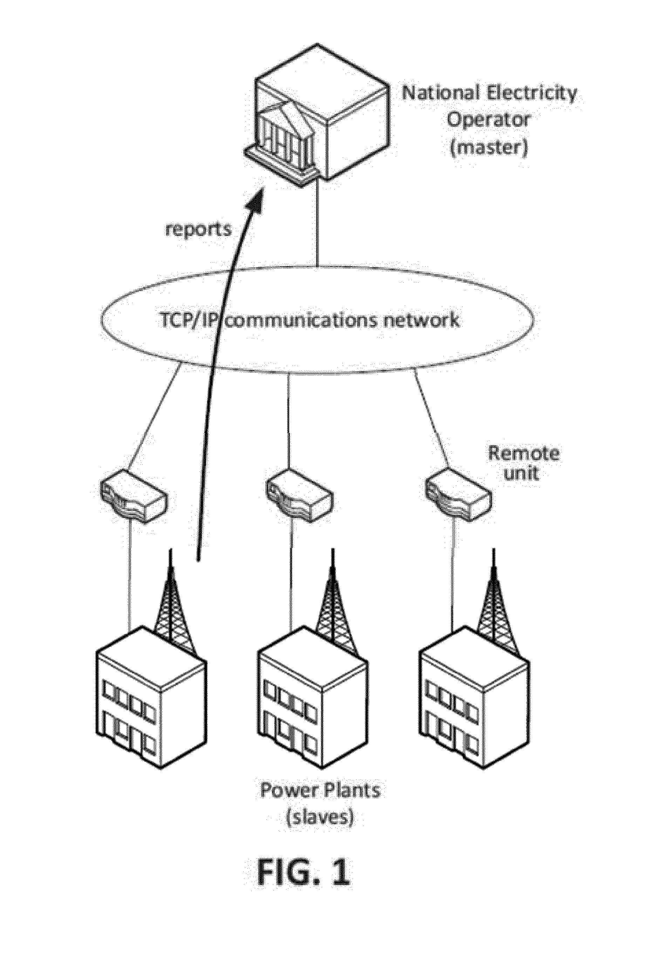

The reporting mechanism is implemented with specific TCP/IP protocols, which are part of a major system called Supervision, Control And Data Acquisition (SCADA) that work following the client-server paradigm. In the SCADA world the server is called "slave" and the client "master", since the slave performs the operations the master decides. In electricity generation, the power plants play the role of slaves, and equipment located at the Operator plays the role of the master. Figure 1 shows an example in which a National Electricity Operator communicates with several Power Plants by means of SCADA systems.

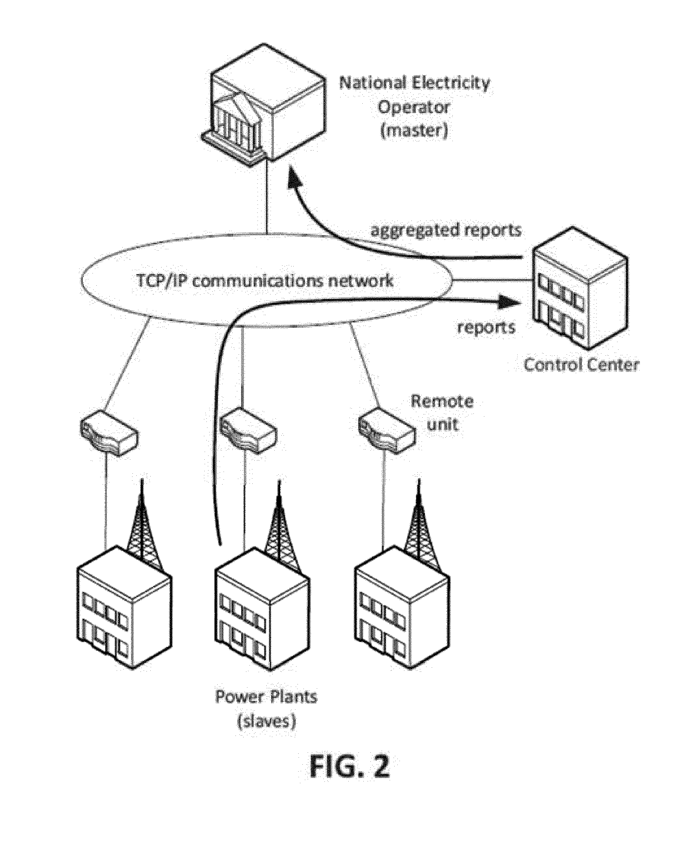

Figure 2 illustrates other common scenario where a Control Center aggregates reports from several power plants and sends summaries to the Operator.

Masters can request information from the slaves, in a synchronous way; or "subscribe" for information, asynchronously sent by the slaves to the masters when it is ready. The schema depends on the SCADA protocol. Masters are usually big communications servers (acting as the clients of the SCADA system) connected to an internal LAN (SCADA LAN) containing report repositories, terminal servers, etc.

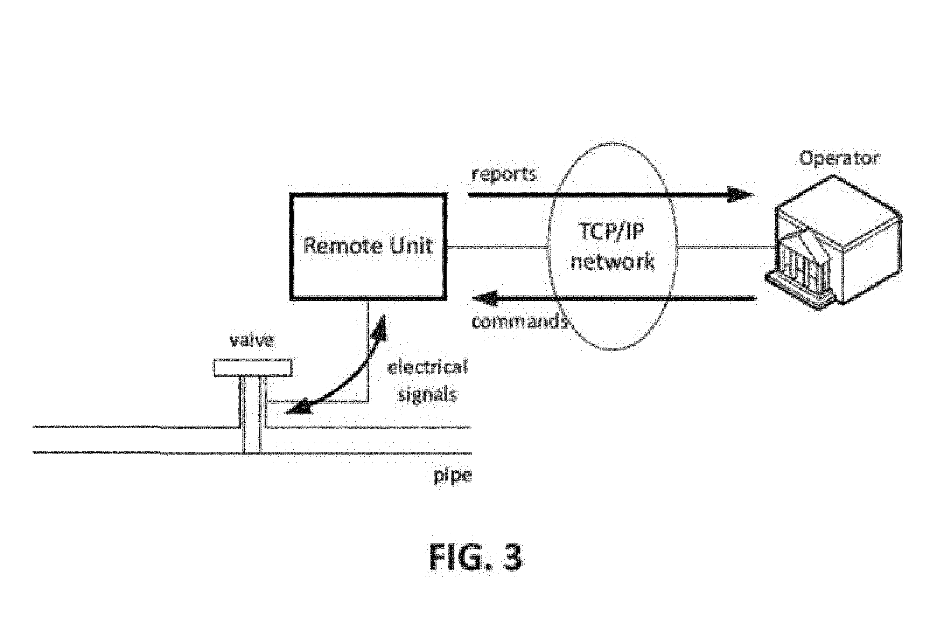

Slaves deploy specific technology interacting with the final devices of the power plant (valves, switches, sensors, etc.) and generating the reports. This technology will be generally called here "remote unit" for simplicity purposes, and basically they implement hardware controllers and a TCP/IP stack. More details can be found in the literature about this. Figure 3 illustrates an example where a Remote Unit (slave) controls a valve of a pipe by means of commands sent by an Operator or Control Center (master). The Remote Unit exchanges electric signals with the controlled physical device, and TCP/IP-based messages with the master.

The Electricity Operator needs to check at some moment if the production reported through the mechanism described above is the real one, due to this checking is the base for fining producers violating the agreement reach at the auction demand. Nevertheless, it has been said the produced electricity is not sent to the Electricity Operator, but directly injected into the transport network. The way the Operator knows the real produced electricity is by receiving, once a day, another measure from the transport network; and then both measures are compared and deviations are found.

The main problems with these solutions are derived from the use of remote units. As said, these are hardware controllers, and in most cases, they are very old ones (SCADA are systems that evolve very slowly, once a deployment works, it may work for years without changes). This leads into a set of error-related use cases that electricity producers need to avoid:
- Report messages are lost. This is totally different from a lost TCP frame, which is retransmitted until it arrives and is acknowledged. Simply, the remote unit does not send the message due to an internal error.
- Report messages contain not updated measures. Sometimes, remote units do not correctly update the buffer for certain measure, reporting a freeze value in consecutive messages.
- Report messages contain measures out of the expected range. A value exceeds the normal range of values, either sending an impossible and very high measure, either reporting an abnormal very low value.

The above scenarios are undesired by electricity producers because all of them invalidate the reporting mechanism with the National Electricity Operator: producers experiencing lost reports or anomalous values in the measures are not reporting the real production level, but totally unknown random values that can lead to fines.

Generally there exist two different types' of mechanisms for checking the production: by means of performing an offline production checking or by means of using monitoring tools.

The Offline production checking, as said before, is performed once a day, when the reports sent by the producers are compared with the real production (measured at the transport network). Both data are sent to the National Electricity Operator, and if a difference is found, the producer is fined. If this check would be done in real time, the producer could be warned, but doing it offline nothing can be done, the producer may be sending anomalous reports as described above all the day and no one system alerts about it. Since the shown architecture cannot be changed without dramatic consequences for the whole electricity system and the nation, the solution must pass through a specific monitoring at the producer premises.

On another hand, there are no monitoring tools such as required by the electricity generation market, i.e. tools looking for anomalies in the reports sent to the Electricity Operator. As much, some solutions have been designed for the electrical recovery of specific SCADA equipment. For instance, patent application KR 20090031054 "System and method of remote error recovery for fault prevention of power SCADA") proposes a monitoring system for electric substations, allowing for the reception of alerts related to the physical fail of the substation. Other works, such as patent US 2007250217 "Apparatus and method for detecting a connection error of SCADA RTU system", relate to some devices used to query SCADA equipment in order to prevent future faults.

All these solutions are focused on recovering from a physical fail of the hardware, but nothing exists about detecting anomalies within the reported measures, and much less about regenerate those ones.

### Summary of the Invention

An object of the present invention is to provide a new mechanism, consisting on hardware and software components, to look for anomalies in the measures within the reported messages exchanged between a slave node and a master node and to inject appropriate measures instead of the anomalous ones.

In accordance with one aspect of the present invention, the above and other objects can be accomplished by providing a computer implemented method for tracking and checking measures, wherein a master node comprises receiving from a plurality of slaves' nodes messages, such as SCADA messages, related with measures generated by the slaves' nodes, the computer implemented method comprising:
- capturing, a traffic driver unit, said messages sent by the slaves' nodes and further sending them to a monitor unit;
- analyzing, said monitor unit, the received messages so as to detect, by means of a behavioral learning technique, anomalies in said messages;
- when an anomaly is detected, sending, said monitor unit, the detected anomaly to a regenerator unit to at least regenerate the detected anomaly by means of a prediction technique; and
- injecting, said traffic drive unit, the measures regenerated by said regenerator unit to the transport network.

In accordance with a preferred embodiment, when an anomaly is not detected, the monitor unit returns the received messages to the traffic driver unit, and the traffic driver unit further progresses the messages to the transport network.

In accordance to an embodiment, the captured messages are decoded, previous to said sending, in an abstract representation to extract the related measures. For instance, the abstract representation can consist in a collection of pairs value/attribute in which it would be usual to find pairs such as source_ip_addr =x.y.z.w, destination_ip_addr=x.y.z.w, source_port=80, and in general, any field with the usual headers of the TCP/IP protocols.

In accordance to another embodiment, the decoded messages can be further modeled, as part of said analyzing step, by executing at least one of: identifying the received messages, computing the frequency in which the messages were sent, computing the number of different production measures contained in the messages, computing the maximum and minimum values the measures can take and/or computing the repetition rate of the measures.

Preferably, the anomaly would be detected by comparing the received messages with said modeled messages and the modeled messages would be preferably stored in a models repository unit.

In accordance to another embodiment, the detected anomaly sent to the regenerator unit will include information regarding: original message information, type of the detected anomaly, a specific message identifier, and an abnormal measure index.

In accordance to yet another embodiment, the regeneration or prediction of said detected anomaly is performed based on previous recent values of the measures, being said previous recent values of the messages previously gathered by said monitor module and stored in said models repository unit.

Several prediction techniques can be applied, such as extrapolation, interpolation, regression, principal component analysis or a temporal memories technique.

In accordance to yet another embodiment, the detected anomaly comprises at least one of a lost message, a received message containing not updated measures and/or a received message containing measures out of an expected range.

In accordance with another aspect of the present invention it is provided a computer program comprising computer program code means adapted to perform all the steps of claim 1 when said program is run on a computer.

In accordance with another aspect of the present invention it is provided a computer program comprising computer program code means adapted to perform claim 2 when said program is run on a computer.

### Brief Description of the Drawings

The previous and other advantages and features will be more fully understood from the following detailed description of embodiments, with reference to the attached, which must be considered in an illustrative and non-limiting manner, in which:
Fig. 1 is an illustration of a common scenario for reporting electricity measures where a National Electricity Operator communicates with several Power Plants by means of SCADA systems.
Fig. 2 is an illustration of another common scenario for reporting electricity measures where a Control Center aggregates reports from several power plants and sends summaries to the Operator.
Fig. 3 is an illustration showing a Remote Unit (slave) controlling the valve of a pipe by means of commands sent by an Operator or Control Center (master). The Remote Unit exchanges electric signals with the controlled physical device, and TCP/IP-based messages with the master.
Fig. 4 is an illustration of the deployed architecture and summarized functionality of the present invention according to some embodiments.
Fig. 5 is an example of a prediction enabled window for a measure that becomes abnormal for a while. The prediction, without being perfect, is better than random values.
Fig. 6 is an illustration of the proposed software architecture of the present invention.
Fig. 7 is an illustration of the production curve prediction. As it can be seen, regenerated values are based on the trend seen for the previous N values and the maximum and minimum modeled values.
Fig. 8 is a diagram showing the functionality and interactions between the different modules of the present invention.

### Detailed Description of the Preferred Embodiments

As mentioned above, the present invention provides a new computer implemented method for tracking or monitoring the messages exchanged between a slave node and a master node, in order to look for anomalies in the measures within those messages and to inject appropriate measures instead of the anomalous ones.

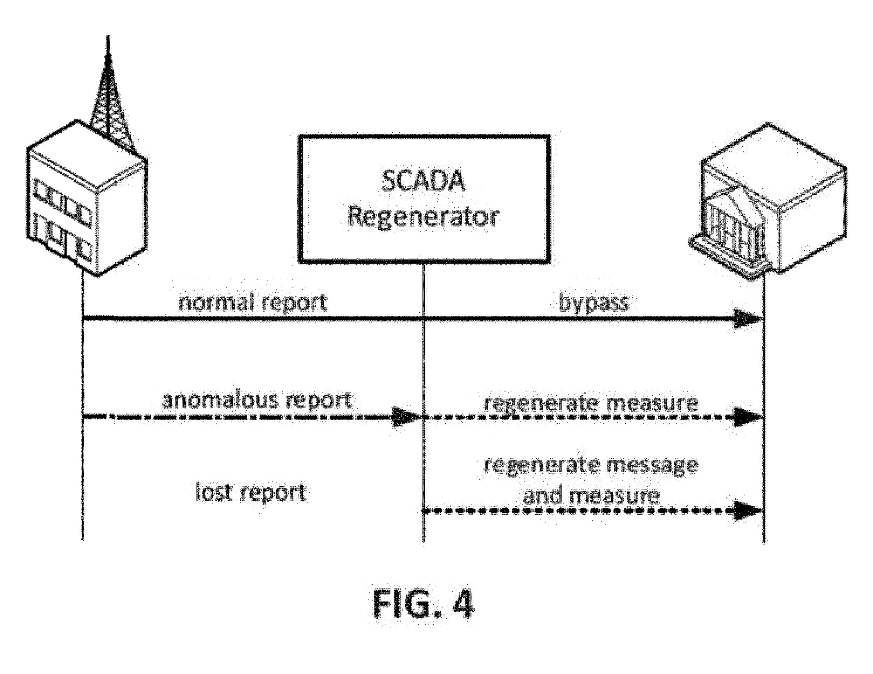

Fig. 4 shows the proposed implementation architecture and functionality of the present invention, wherein, according to some embodiments, it can be seen that normal reports are bypassed, those containing anomalous measures are fixed and those reports lost are totally regenerated.

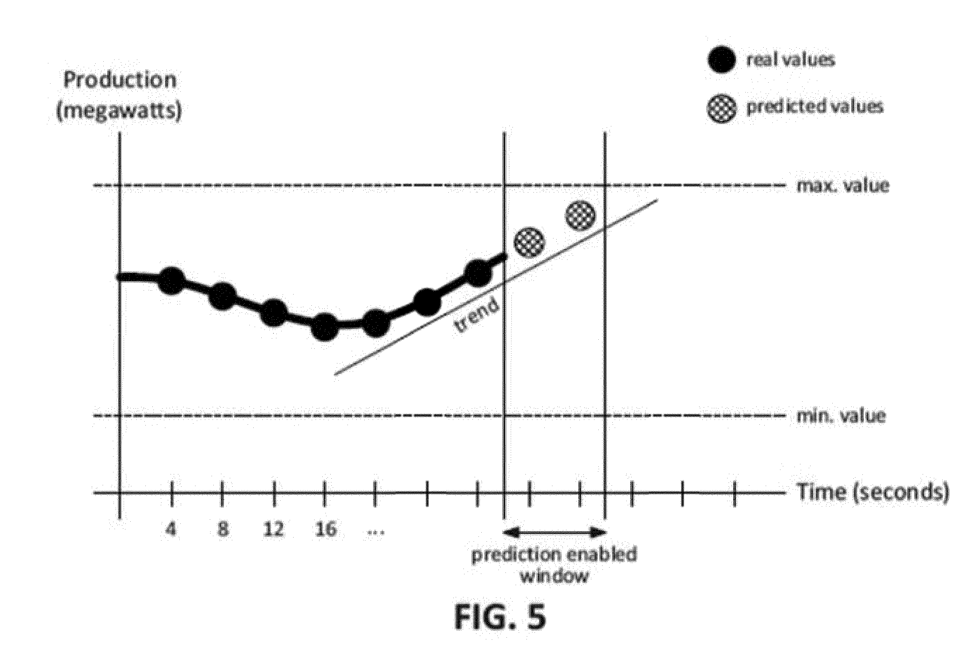

The invention is based on the premise that the production of electricity ranges between certain values, it does not change dramatically (unless the power plant is programmed to stop) and the variations in the production curve are soft, as shown in the Fig. 5. Therefore, it can be predicted or interpolated with high accuracy based on recent values, at least for a certain time window (after the one the prediction is impossible because the recent values will be all interpolated ones).

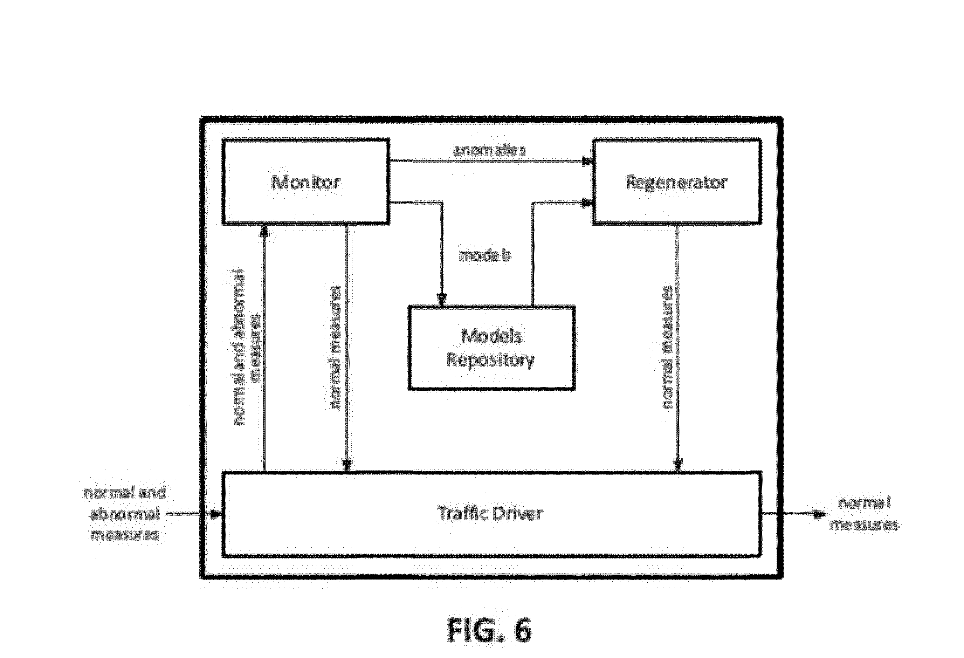

Fig. 6 shows the different modules or units proposed by the present invention in order to detect the anomalies in the reported measures and in order to regenerate them. These modules or units are:
- The Monitor unit which is in charge of analyzing all the messages (i.e. SCADA messages), and looking for one anomaly. To perform this analysis, it may need to model the usual exchanged messages and its characteristics (frequency, value ranges, etc.);
- The Regenerator unit which is in charge of regenerate the expected measure when an anomalous one is found. In order to compute the expected value, prediction techniques based on the last reported values are preferably used;
- The Traffic Driver unit in charge of capturing the traffic that is sent to the Monitor unit, and is also in charge of injecting the traffic generated by the Regeneration unit; and
- The Models Repository unit which stores the different models created by the monitor unit. This unit or module can be implemented by means of whichever permanent storage mechanisms such as files, relational data bases, among others.

According to an embodiment, the Monitor unit receives SCADA messages (and therefore measures) captured by the Traffic Drive unit, analyses it and sends anomalies to the Regenerator unit. The analysis comprises the steps of messages reception, messages modelling, anomaly detection and anomaly reporting. The Traffic Drive does not provide raw traffic but processed one, in order the Monitor focuses on finding anomalies. This processed information is received, conceptually, by a buffer in a consumer/producer schema together with the Traffic Drive.

Preferably, the anomalies are found by considering several generic strategies, each one based on an aspect of the following behaviour model (specific implementations are out of the scope of this patent document, although some ideas will be provided):
- Usual messages identification. Previously to the other strategies, the goal is to learn all the unique message exchanges, in order to model their characteristics later. Unique messages exchanges vary among pairs of communicating entities (master and slave), thus, bilateral matrixes must be calculated. Messages identification can be done by means of hashes calculation, clustering algorithms, etc.
- Messages characterization. Once unique messages are identified, they preferably are modelled in terms of the following features:
   ○ Number of measures within the messages. It is usual that SCADA messages carry more than one measure at the same time so it would be necessary to identify all the different measures within a message in order to model per-measure features.
   ○ Frequency of the message. SCADA requests and reports are almost periodic, thus the frequency can be easily modelled and greatly helps in tracking lost messages (it is only necessary to discover messages not arriving in time).
- Measures characterization. In addition to messages characterization, each measure shows its own features:
   ○ Maximum and minimum values of each measure. They are needed in order calculate the per-measure ranges.
   ○ Usual rate for not changing measures. Not every sequence of not changing measures is abnormal; sometimes this can be part of the normal behaviour of the device behind the measure. E.g. a binary sensor can perfectly report tens of consecutive "false" measures; in this case the abnormality will occur when hundreds or thousands repetitive reports are sent.

The above model-related information is stored in the Models Repository component unit of the present invention.

Other knowledge, such as Temporal sequences of messages, not related with anomaly detection but with messages and measures regeneration could be also gathered by the Monitor unit and stored in a Models Repository unit too. For each communicating pair of entities (master and slave) and each unique message for this pair, it is necessary to remember the value for the last N measures. This will allow to regenerate both lost messages and freeze and out of range measures.

Then, the anomaly detection is performed preferably by comparing the current messages with the modelled ones. Measure's values are tracked in order to find freeze and/or out of range values, and the arrival time for the last N messages is remembered in order to detect out of frequency or lost messages. If an anomaly is detected, certain information is sent to the Regeneration unit. If not, the message is re-injected to the network through the Traffic Driver.

Once an anomaly is detected, it is sent to the Regeneration unit in order to replace it with a measure and/or a message more suitable. Preferably the information that would be included in the message is:
- Original message information (if exists). It will contain, among others, the normal and anomalous measures (the first will remain, the second ones much probably will be replaced by regenerated values) and the source and destination entities.
- Type of the anomaly. An identifier for one of the three known anomalies. It will lead the mitigation decision.
- Message unique identifier. Together with the source and destination entities contained within the original message information, it allows to access the specific temporal sequence model when regenerating.
- Abnormal measure indexes. In order to identify which measures are candidate to be replaced.

The Regeneration unit receives notifications of anomalies from the Monitor unit, and tries to solve it by predicting the normal value that should have been sent instead the anomalous one. In other cases, this regeneration process includes the creation of the whole message, as is the case of the lost messages scenario.

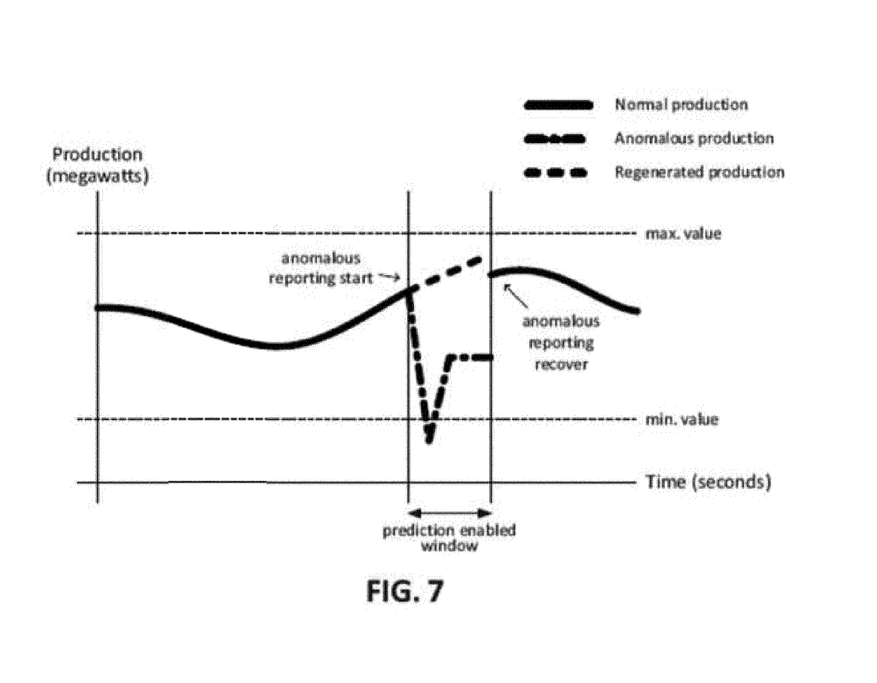

Given a message type and a pair of communicating entities (master and slave), regeneration or values prediction is based, according to an embodiment, on the last N values seen for that message type when exchanged between those master and slave. This information is located at the Models Repository unit, as already known. The graphical prediction process is depicted in Fig. 7. As can be seen, the prediction is based on the trend of the previous values. The prediction may be wrong, of course, since an increasing trend may decrease suddenly, but it is always closer to the real value than a random value sent by the Remote Unit.

Several implementations can be given for this mechanism, such as temporal memories, interpolation, regression, Principal Components Analysis, etc.

Next, once a measure, even a whole message is regenerated, it is sent to the Traffic Driver unit in order to inject it to the network.

The Traffic Driver module has two functions: the first one is to capture the SCADA messages (or measures) from the network, to decode it, to extract the messages data in a certain abstract representation and to send it to the Monitor component. The second one is to receive messages data in an abstract representation from the Regeneration module, to create traffic according to those messages and to inject it in the network.

It must be noticed that TCP/IP messages are captured and injected from and to the network within the present invention, and it is not received o sent. The difference is when a TCP/IP packet is received, the destination address of the IP packet is the IP address of the receiving device; the same when it is sent, the source address of the packet is the IP address of the sending device. Since the present invention must work in a transparent fashion, it cannot work at OSI layer 3, i.e. it cannot have IP addresses configured in its network interfaces, and must work in promiscuous mode, capturing and injecting traffic.

Among other information managed by the Traffic Drive unit when processing the SCADA messages, it preferably considers the following one:
- Source and destination identifiers. They could be IP addresses or even specific identifiers used by the specific SCADA protocol.
- Direction of the message. i.e. whether it is sent from the master to the slave, or vice versa.
- Number of measures within the message. Since a SCADA message may carry several measures at the same time.
- Type and value for each measure.

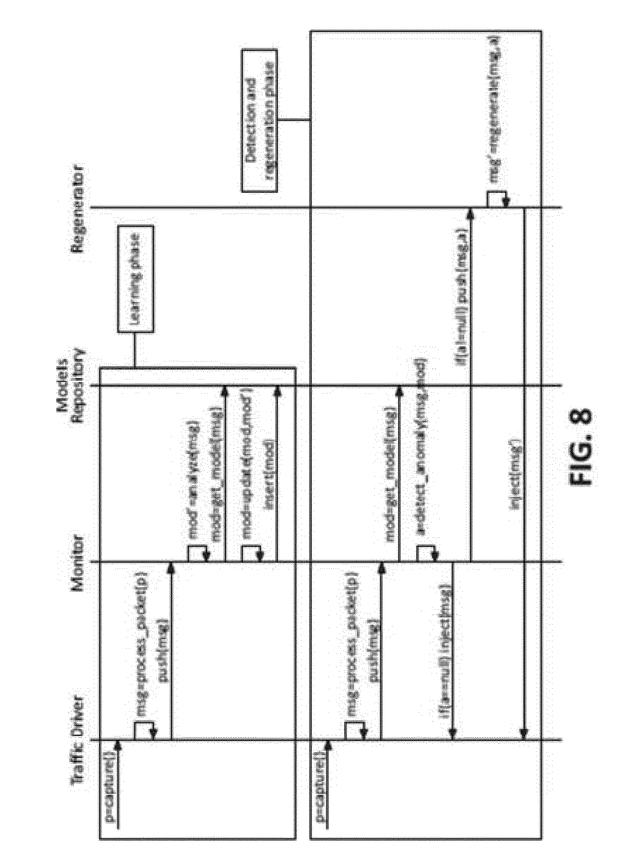

Fig. 8 shows a summary of each module functionality and interactions with other modules, which in the end shape the present invention.

The proposed invention is of special importance for allowing electricity producers to recover for short periods of anomalous reporting without risking to be fined. Due it is suited for short periods of time where the trend of the measures can be mimicked it cannot substitute the genuine reports, nor be used in fraud against the Operator of the electricity market.

Moreover, it can be perfectly generalized to other SCADA scenarios sharing a reporting mechanism and architecture as shown for the electricity generation. That is the case of gas and water distribution, where producers are simply big storing plants injecting the resource into a transport network when needed, reporting a centralized Operator about this injection.

Nevertheless, the SCADA measures regenerator described in this document can be useful in many other SCADA environments, where not necessarily an entity playing the role of the Operator exists, but still having important dependencies from the reported measures the SCADA devices sent within their strongly automated infrastructure. That is the case of the automotive industry, food distribution, etc. They will not be fined by such an Operator, but from an economic standpoint and business continuity, they cannot allow for anomalous reports.

The scope of this invention is defined in the following set of claims.

## Claims

1. A computer implemented method for tracking and checking measures, wherein a master node comprises receiving from a plurality of slaves nodes messages related with measures generated by the slaves nodes, the method being **characterized in that** comprises the following steps:
- capturing, a traffic driver unit, said messages sent by the slaves nodes and further sending them to a monitor unit;
- analyzing, said monitor unit, the received messages so as to detect, by means of a behavioral learning technique, anomalies in said messages;
- when an anomaly is detected, sending, said monitor unit, the detected anomaly to a regenerator unit for regenerating at least the detected anomaly by means of a prediction technique; and
- injecting, said traffic drive unit, measures regenerated by said regenerator unit to the transport network.

2. A method according to claim 1, further comprising when an anomaly is not detected, returning, said monitor unit, the received messages to said traffic driver unit, the traffic driver unit progressing the messages to said transport network.

3. A method according to claims 1 or 2, wherein said captured messages are decoded, previous to said sending, in an abstract representation to extract the related measures.

4. A computer implemented method according to claim 3, wherein said analyzing further comprises modeling said decoded messages by executing at least one of: identifying the received messages, computing the frequency in which the messages were sent, computing the number of different production measures contained in the messages, computing the maximum and minimum values the measures can take and/or computing the repetition rate of the measures.

5. A computer implemented method according to claim 4, comprising detecting said anomaly by comparing the received messages with said modeled messages.

6. A computer implemented method according to claim 4, comprising storing said modeled messages in a models repository unit.

7. A computer implemented method according to claim 1, wherein said detected anomaly sent comprises the following information: original message information, type of the detected anomaly, a specific message identifier, and an abnormal measure index.

8. A computer implemented method according to claim 1 or 7, comprising performing the regeneration or prediction of said detected anomaly based on previous recent values of the measures, being said previous recent values of the messages previously gathered by said monitor module and stored in said models repository unit.

9. A computer implemented method according to claim 8, wherein said prediction technique comprises at least one of an extrapolation, interpolation, regression, principal component analysis or a temporal memories technique.

10. A computer implemented method according to previous claims, wherein said detected anomaly comprises at least one of a lost message, a received message containing not updated measures and/or a received message containing measures out of an expected range.

11. A computer implemented method according to previous claims, wherein said behavioral learning technique comprises at least a statistic technique or a machine learning technique.

12. A computer implemented method according to claim 1 or 2, comprising performing said capturing every certain period of time.

13. A computer implemented method according to previous claims, wherein said messages are SCADA messages.

14. A computer program comprising computer program code means adapted to perform all the steps of claim 1 when said program is run on a computer.

15. A computer program comprising computer program code means adapted to perform claim 2 when said program is run on a computer.
